(19) Europäisches Patentamt

European Patent Office

Office européen des brevets

(11) **EP 0 650 273 B1**

(12) **FASCICULE DE BREVET EUROPEEN**

(45) Date de publication et mention
de la délivrance du brevet:
**20.09.2000 Bulletin 2000/38**

(51) Int. Cl.⁷: **H04J 3/07**

(21) Numéro de dépôt: **94402338.1**

(22) Date de dépôt: **18.10.1994**

(54) **Dispositif pour justifier à intervalles réguliers un train numérique**

Anordnung zum Einfügen von Stopfbits in regelmässigen Abständen in einer digitalen Impulsfolge

Circuit for inserting stuffbits in a digital data stream at regular distances

(84) Etats contractants désignés:
**AT BE CH DE ES GB IT LI NL SE**

(30) Priorité: **20.10.1993 FR 9312497**

(43) Date de publication de la demande:
**26.04.1995 Bulletin 1995/17**

(73) Titulaire: **ALCATEL**
**75008 Paris (FR)**

(72) Inventeur: **Etienne, Jean-Paul**
**F-22700 Saint Quay Perros (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**WO-A-93/18595**          **US-A- 4 791 652**

• **WORLD TELECOMMUNICATION FORUM TECH.
SYMP., no.2, 10 Octobre 1991, GENEVA pages 45
- 49, XP391310 RALP URBANSKY 'Simulation
results and field trial experience of justification
jitter.'**

**Description**

L'invention concerne un dispositif pour justifier à intervalles réguliers un train numérique constitué de trames en provenance d'une première liaison synchrone cadencée par une première horloge, et qui est à émettre sur une seconde liaison synchrone cadencée par une seconde horloge. La présente invention est applicable à une passerelle entre deux liaisons à l'intérieur d'un même réseau synchrone du type à hiérarchie numérique synchrone.

Dans ce type de réseau, les trains numériques sont formés suivant la hiérarchie de multiplexage synchrone définie dans les recommandations G7O7, G7O8, G7O9 du CCITT. Un train numérique, à 155 Mb/s par exemple, est constitué de trames appelées modules de transport synchrone et structurées en octets. Chaque module peut être représenté comme un tableau comportant 270 colonnes et 9 rangées. Chacune des neuf rangées peut être considérée comme un paquet de 270 octets, comportant une en-tête de 9 octets et une charge utile de 261 octets. Cette charge utile est constituée par des données qui sont elles-mêmes une fraction d'un conteneur de données, appellé conteneur virtuel. Il existe plusieurs types de conteneur virtuel. Chaque conteneur virtuel comporte un surdébit de conduit, réservé à l'exploitation du réseau, et des données à transporter.

Le nombre des bits des données transportées dans chaque conteneur virtuel est identique pour tous les conteneurs d'un même type. Par contre, les conteneurs n'ont pas une position fixe par rapport aux trames, à cause des déphasages créés par les temps de propagation dans le réseau et à cause des opérations de justification positive ou négative réalisées dans les noeuds du réseau. Un conteneur peut donc être transporté à cheval sur deux modules successifs. L'en-tête de la première rangée d'un module permet de détecter le début de ce module. Généralement ce début ne coïncide pas avec le début d'un conteneur virtuel. Le début d'un conteneur virtuel est repéré par un pointeur qui est transmis dans l'en-tête d'une rangée déterminée de chaque module.

Lorsque le train numérique est stocké dans une mémoire, la valeur de ce pointeur permet un adressage relatif des informations constituant le début d'un conteneur, relativement à l'adresse où est stocké le pointeur. D'autre part, ce pointeur est suivi d'un bloc de trois octets de réserve qui permettent éventuellement de réaliser une justification négative. Elle consiste à transmettre les données à transporter avec une avance de trois octets en utilisant les trois octets de réserve pour transmettre trois octets de données utiles, au lieu de transmettre trois octets sans signification.

Une justification positive consiste à transmettre les données à transporter, avec une avance de trois octets, en transmettant, à la suite de ces trois octets de réserve, trois octets n'ayant aucun contenu significatif au lieu de trois octets de données, et en décalant les données de telle sorte qu'il y a toujours le même nombre d'octets de données dans le conteneur considéré. Cette possibilité de justification positive ou négative est employée en particulier dans une passerelle du type reliant un réseau plésiochrone à un réseau à hiérarchie numérique synchrone, pour passer d'un débit de 144 Mb/s à un débit de 155 Mb/s. Elle est employée aussi pour rattraper les différences de phase entre deux liaisons synchrones reliées par une passerelle à l'intérieur d'un même réseau à hiérarchie numérique synchrone.

Une telle passerelle comporte une mémoire tampon ayant une capacité très inférieure à une trame. Cette mémoire tampon stocke les données à transporter, sans les en-têtes, à la cadence d'une première horloge cadençant la première liaison; et les restitue à la cadence d'une seconde horloge cadençant la seconde liaison. Un circuit détermine la différence entre l'adresse courante d'écriture et l'adresse courante de lecture de cette mémoire, pour déterminer la valeur du remplissage de cette mémoire tampon par les données en attente de lecture. Cette différence est comparée à une première valeur de seuil, voisine de la capacité de la mémoire tampon, pour commander une justification positive lorsque la valeur du remplissage dépasse cette première valeur de seuil. La valeur du remplissage est comparée en outre à une seconde valeur de seuil pour produire un signal de commande de justification négative lorsque la valeur du remplissage est inférieure à cette seconde valeur de seuil. Ces deux valeurs de seuil sont fixées. Un dispositif de ce type est divulgué par le document WO 93/18595.

Pour un décalage de fréquence donné, entre la première et la seconde horloge, ce dispositif fournit un signal de commande de justification, positive ou négative, qui est périodique. Par exemple au cours de chaque période ce signal commande 87 justifications consécutives, à intervalles réguliers, et un intervalle vide ayant une durée correspondant à trois justifications. Par exemple, un écart de fréquence de 5 ppm correspond à une période de 30 mS pour le signal de commande de justification, c'est-à-dire une fréquence de l'orde de 33 Hz.

Si le train numérique traverse trois passerelles successivement, à la sortie de la troisième passerelle le signal peut présenter 3 x 87 justifications consécutives suivies d'un intervalle vide dont la durée correspond à trois 3 x 3 justifications, dans chaque période de ce signal. Cette irrégularité de la justification n'a pas d'inconvénient dans un réseau à hiérarchie numérique synchrone, mais crée une gigue de phase lorsque le train numérique repasse dans un réseau plésiochrone. Cette gigue peut être filtrée, mais ce filtrage est d'autant plus difficile que l'on souhaite filtrer la gigue à plus basse fréquence.

Le but de l'invention est de faciliter ce filtrage en réduisant cette gigue à sa source, c'est-à-dire au niveau de chaque passerelle rencontrée par le train numérique.

L'objet de l'invention est un dispositif pour justifier à intervalles réguliers un train numérique en provenance d'une première liaison synchrone cadencée par une première horloge, et qui est à émettre sur une seconde liaison synchrone cadencée par une seconde horloge; ce train binaire étant une suite continue de rangées de bits, chaque rangée étant constituée d'un nombre total de bits fixé, mais comportant une charge utile constituée d'un nombre variable de bits, et une en-tête constituée d'un nombre variable de bits, ces nombres de bits variant selon que cette rangée a subi une justification positive, une justification négative, ou aucune justification;

comportant :

- une mémoire tampon pour stocker la charge utile, à la cadence de la première horloge, et la restituer à la cadence de la seconde horloge;
- des moyens pour calculer la valeur du remplissage de la mémoire tampon;
- des moyens pour comparer la valeur du remplissage à une première et à une seconde valeur de seuil; pour produire un signal de commande de justification négative lorsque cette valeur est supérieure à la première valeur de seuil; et pour produire un signal de commande de justification positive lorsqu'elle est inférieure à la seconde valeur de seuil;

caractérisé en ce que la première et la seconde valeur de seuil sont variables;

et en ce qu'il comporte des moyens pour déterminer une première et une seconde valeur de seuil variables, ces moyens déterminant ces deux valeurs de seuil en fonction du déphasage entre l'en-tête d'une rangée en provenance de la première liaison et l'en-tête d'une rangée émise sur la seconde liaison.

Le dispositif ainsi caractérisé réduit la gigue de phase résultant de la justification réalisée par une passerelle puisque cette justification est déclenchée à intervalles réguliers grâce à une modulation des seuils de déclenchement forçant le déclenchement pendant l'intervalle de temps qui était vide selon l'art antérieur.

L'invention sera mieux comprise et d'autres caractéristiques apparaîtront à l'aide de la description ci-dessous et des figures l'accompagnant :

- la figure 1 représente un train numérique transmis dans un réseau à hiérarchie numérique synchrone;
- la figure 2 représente le schéma synoptique d'un exemple de réalisation du dispositif selon l'invention;
- la figure 3 représente des chronogrammes illustrant le fonctionnement d'un dispositif selon l'art antérieur;
- les figures 4 et 5 représentent des chronogrammes illustrant le fonctionnement d'un dispositif selon l'art antérieur respectivement dans deux cas où le déphasage entre une en-tête reçue et une en-tête émise a un signe opposé;
- la figure 6 représente deux chronogrammes illustrant le fonctionnement du dispositif selon l'invention;
- les figures 7 et 8 représentent respectivement le graphe du remplissage de la mémoire tampon, et le graphe de la variation de la première valeur de seuil dans un exemple de réalisation du dispositif selon l'invention, lorsque la mémoire tampon tend à s'assécher;
- les figures 9 et 10 représentent respectivement le graphe du remplissage de la mémoire tampon, et le graphe de la variation de la seconde valeur de seuil, dans le même exemple de réalisation, lorsque la mémoire tampon tend à se saturer;
- la figure 11 représente le schéma synoptique d'une variante de l'exemple de réalisation représenté sur la figure 2;
- les figures 12 et 13 illustrent le fonctionnement de cette variante.

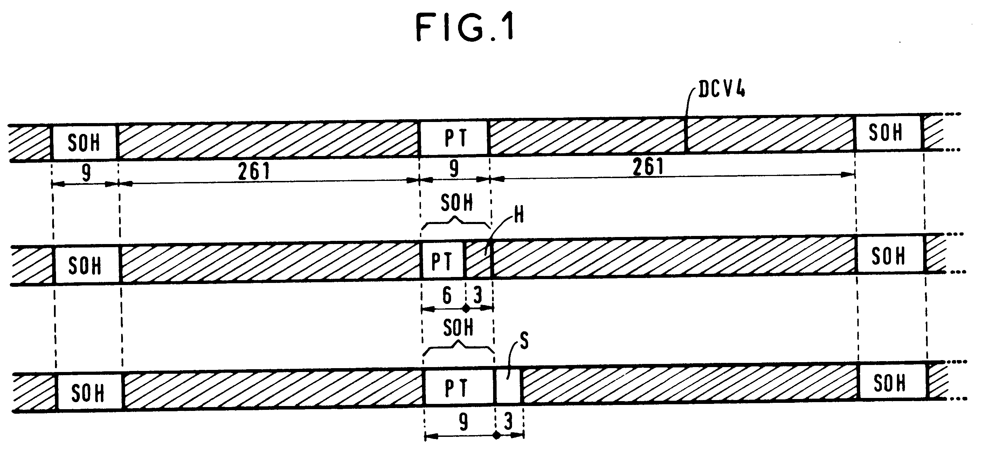

La figure 1 représente sur trois lignes distinctes trois parties d'un même train binaire transmis à 155 Mb/s dans un réseau à hiérarchie numérique synchrone. Chaque ligne de cette figure représente deux rangées appartenant respectivement à trois modules de transport synchrone, dits de niveau 1. La première rangée représentée sur chacune de ces lignes ne comporte aucune justification. Cette rangée comporte une en-tête, référencée SOH, de 9 octets; et une charge utile de 261 octets. Chaque conteneur virtuel est constitué de neuf rangées consécutives. Sur la première ligne, la seconde rangée représentée ne subit aucune justification, par contre elle a la particularité de transporter des données appartenant respectivement à deux conteneurs virtuels dits de niveau 4, distincts. La limite entre ces deux conteneurs est notée DCV4.

La deuxième rangée représentée sur la deuxième ligne représentée a la particularité d'avoir subie une justification négative consistant à décaler la charge utile de cette rangée et des suivantes de telle façon que des données sont inscrites dans une partie H de l'en-tête de cette rangée, constituée de 3 octets. Une telle opération de justification n'est autorisée que dans une seule rangée de chaque conteneur virtuel, cette rangée étant munie d'une entête particulière comportant un pointeur PT permettant de repérer la position de la prochaine frontière entre deux conteneurs virtuels.

La deuxième rangée représentée sur la troisième ligne présente la particularité d'avoir subi une justification positive consistant à décaler la charge utile de cette rangée et des suivantes de façon à libérer un espace vide S constituant un bourrage occupant 3 octets. Une telle opération de justification positive n'est autorisée que dans une seule rangée par module de transport synchrone, cette rangée étant celle dont l'entête contient le pointeur PT. Cette en-tête comporte 9 octets, parmi lesquels 3 octets sont une réserve disponible pour une justification négative.

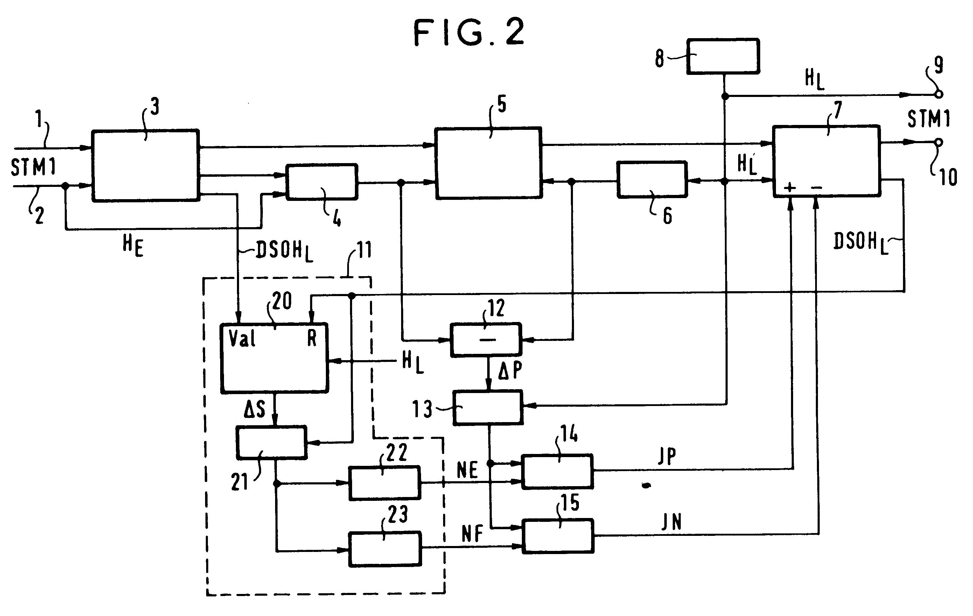

La figure 2 représente le schéma synoptique d'un exemple de réalisation du dispositif selon l'invention. Sa structure ne diffère de celle d'un dispositif selon l'art antérieur que par le fait qu'elle comporte un circuit 11 fournissant deux valeurs de seuil NE et NF qui sont variables, au lieu d'être fixes. Cet exemple de réalisation est relié par deux bornes d'entrée, 1 et 2, à une première liaison d'un réseau à hiérarchie numérique synchrone, fournissant : sur la borne d'entrée 1, un train numérique constitué de modules de transport synchrone de niveau 1, avec un débit de 155 Mb/s; et sur la borne d'entrée 2 un signal d'horloge $H_E$. Il est relié en outre à une seconde liaison de ce réseau à hiérarchie numérique synchrone par deux bornes de sortie, 9 et 10, fournissant respectivement un signal d'horloge $H_L$ et une suite de données constitué de modules de transport synchrone de niveau 1, avec un débit de 155 Mb/s. Ces modules de transport sont définis par la recommendation G7O9.

Cet exemple de réalisation comporte :

- un dispositif 3 d'extraction de conteneurs virtuels de niveau 4, ayant deux entrées reliées respectivement aux bornes d'entrée 1 et 2, et une sortie restituant les conteneurs quartet par quartet;
- un pointeur d'écriture 4 ayant une entrée reliée à la borne d'entrée 2 pour recevoir l'horloge $H_E$, et une entrée reliée à une sortie du dispositif 3 pour autoriser l'écriture des quartets de données, et interdire l'écriture des quartets d'en -tête et de bourrage;
- un pointeur de lecture 6, ayant une entrée recevant un signal d'horloge $H_L$;
- une mémoire tampon 5, ayant : une entrée de données reliée à la sortie de données du dispositif 3, une entrée d'adresse d'écriture reliée à une sortie du pointeur 4, et une entrée d'adresse de lecture reliée à une sortie du pointeur 6;
- un dispositif 7 d'insertion de conteneurs virtuels d'ordre 4 dans des modules de transport synchrone d'ordre 1; ce dispositif 7 ayant : une entrée reliée à une sortie de données de la mémoire tampon 5, une entrée d'horloge recevant le signal d'horloge $H_L$, une sortie reliée à la borne de sortie 10 pour lui fournir des modules de transport synchrone, et une sortie fournissant un signal $DSOH_L$ correspondant à l'en-tête d'une rangée dans un module de transport synchrone qui est émis sur la borne de sortie 10;
- une horloge 8 fournissant le signal d'horloge $H_L$ à la borne de sortie 9, à une entrée du pointeur de lecture 6, et à l'entrée d'horloge du dispositif 7;
- le circuit 11 déterminant les deux valeurs de seuil NE et NF, ayant : entrée reliée à une sortie du dispositif 3 lui fournissant un signal $DSOH_E$ correspondant à l'en-tête d'une rangée dans un module de transport reçu sur la borne 1, une entrée reliée à une sortie du dispositif 4 lui fournissant le signal $DSOH_L$, et deux sorties fournissant respectivement les valeurs NE et NF;
- un soustracteur 12 ayant : une entrée reliée à la sortie du pointeur d'écriture 4, une entrée reliée à la sortie du pointeur de lecture 6, et une sortie fournissant une valeur $\Delta P$ qui est la différence entre l'adresse courante de lecture et l'adresse courante d'écriture dans la mémoire tampon 5, pour déterminer la valeur du remplissage de la mémoire tampon 5;
- un registre 13 ayant une entrée reliée à la sortie du soustracteur 12, et une entrée de commande reliée à la sortie de l'horloge 8 pour recevoir le signal $H_L$;
- et deux comparateurs 14 et 15 ayant une entrée commune reliée à une sortie du registre 13; et ayant chacun: une entrée reliée respectivement aux sorties du circuit 11 fournissant la valeur de seuil NE et la valeur de seuil NF, et une sortie reliée respectivement à deux entrées du circuit 7, commandant respectivement une justification positive et une justification négative.

La réalisation de ces moyens, à l'exception du circuit 11, est classique, car ils constituent un dispositif connu de justification d'un train numérique.

Le dispositif 3 extrait chaque conteneur virtuel de niveau 4, qui est transporté dans la suite de modules de transport synchrone de niveau 1, qui est appliquée à la borne d'entrée 1. Pour réaliser cette extraction, le dispositif 3 interprète le pointeur qui fait partie de l'entête de la quatrième rangée de chaque module de transport synchrone. Le dispositif 3 ne fournit à la mémoire tampon 5 que le conteneur virtuel. Par contre, il fournit au circuit 11 le signal $DSOH_E$ qui correspond à chaque en-tête SOH qui est située au début de chaque rangée du module. Les données transportées par le conteneur sont inscrites, quartet par quartet, dans la mémoire tampon 5 à des adresses successives fournies par le pointeur d'écriture 4 incrémenté par l'horloge $H_E$, et validé par le circuit 3.

La mémoire tampon 5 est relue, quartet par quartet, à l'adresse de lecture fournie par le pointeur 6, à la cadence de l'horloge $H_L$. L'écart $\Delta P$, entre l'adresse de lecture et l'adresse d'écriture, traduit le remplissage de la mémoire tampon 5, et traduit aussi le déphasage entre le cycle de lecture et le cycle d'écriture dans cette mémoire. L'écart $\Delta P$ est mémorisé dans le registre 13 sous la commande du signal d'horloge $H_L$ puis est appliqué aux comparateurs 14 et 15, pour être comparé à la valeur de seuil NE qui correspond à une mémoire presque vide, et à la valeur de seuil NF qui correspond à une mémoire presque pleine.

Si $\Delta P$ est inférieur ou égal à NE la mémoire 5 est presque vide. Le comparateur 14 commande alors le dispositif 7 pour réaliser une justification positive consistant à insérer dans le module de transport synchrone en cours d'émission trois octets supplémentaires n'ayant aucun contenu significatif. Au contraire, si $\Delta P$ est supérieur ou égal à NF, la mémoire 5 est presque saturée. Le comparateur 15 commande alors le dispositif 7 pour réaliser une justification négative consistant à placer trois des octets de données à transporter, dans trois octets de réserve prévus pour cette justification négative, dans le module de transport synchrone en cours d'émission.

Considérons tout d'abord le fonctionnement du dispositif selon l'art antérieur pour expliquer ensuite le fonctionnement du circuit 11. Les variables correspondant à l'art antérieur portent l'accent.

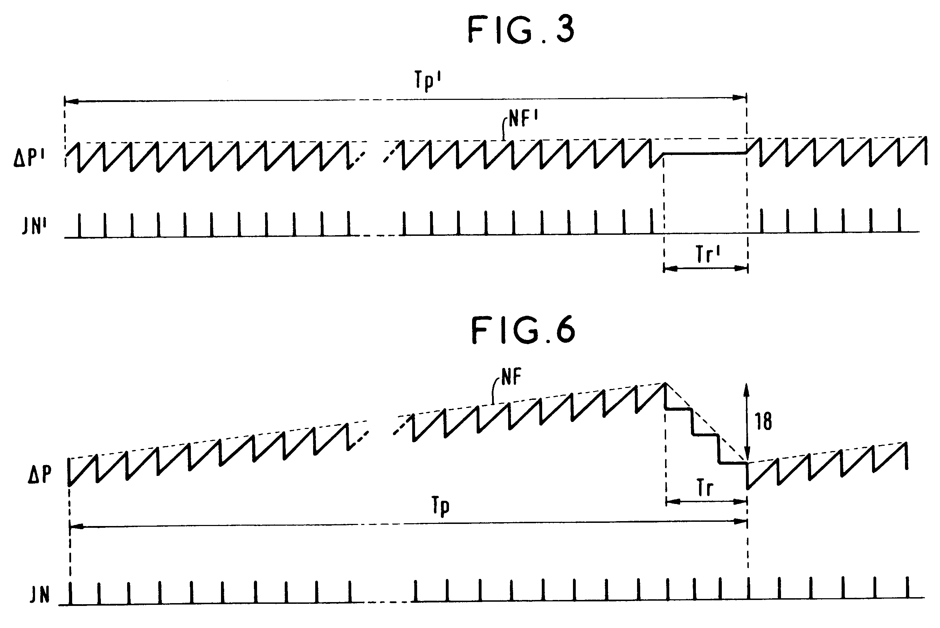

La figure 3 illustre le fonctionnement d'un dispositif selon l'art antérieur, en représentant sur une première ligne la valeur de l'écart $\Delta P'$ entre l'adresse de lecture et l'adresse courante d'écriture; et sur une seconde ligne le signal $JN'$ commandant les justifications négatives, dans le cas où la mémoire tampon 5 tend à se saturer. Ces deux signaux ont une période $T_p'$. Pendant chaque période, le signal $\Delta P'$ a une forme en dents de scie, comportant 87 dents, puis un niveau constant pendant un intervalle de temps $T_r'$ dont la durée correspond à trois dents. Ce graphe représente en réalité l'enveloppe de l'écart $\Delta P'$, car $\Delta P'$ varie en marches d'escalier correspondant chacune à un quartet.

La pente positive de chaque dent représente une augmentation de l'écart $\Delta P'$ dûe à une différence de cadence entre les modules de transport synchrone entrant et ceux sortant du dispositif, alors que les flancs négatifs presque verticaux correspondent à une justification négative ramenant brutalement l'écart $\Delta P'$ à une valeur plus faible que la valeur de seuil $NF'$. Pendant l'intervalle $T_r'$ l'écart $\Delta P'$ reste à une valeur constante intermédiaire entre la valeur minimale et la valeur maximale de cet écart. Pendant chaque période $T_{p'}$, le signal $JN'$ comporte une suite de 87 impulsions consécutives correspondant respectivement aux instants où le signal $\Delta P'$ atteint la valeur de seuil $NF'$; et comporte un intervalle vide pendant l'intervalle de temps $Tr'$ où l'écart $\Delta P'$ n'atteint jamais la valeur de seuil $NF'$, puisque cet écart $\Delta P'$ reste constant et que le seuil $NF'$ est constant.

Un fonctionnement analogue est constaté pour la justification positive, dans un dispositif selon l'art antérieur.

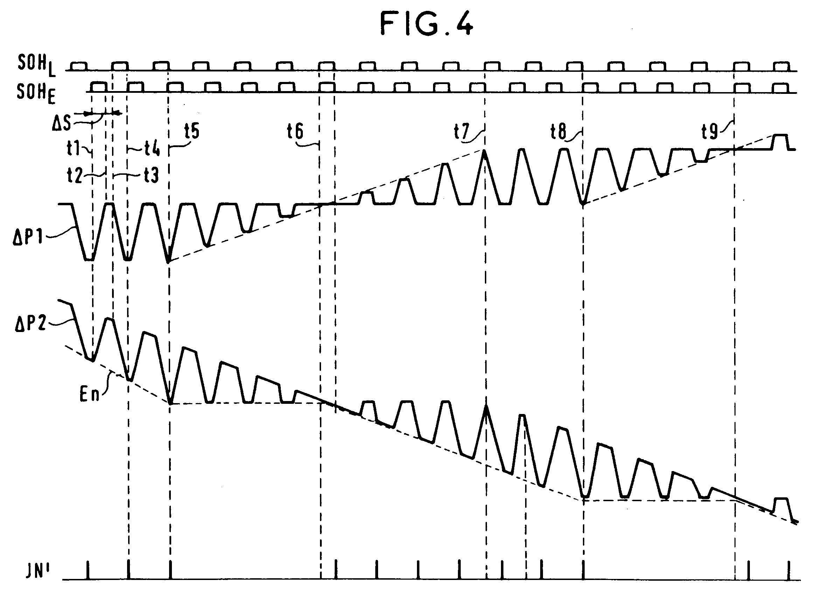

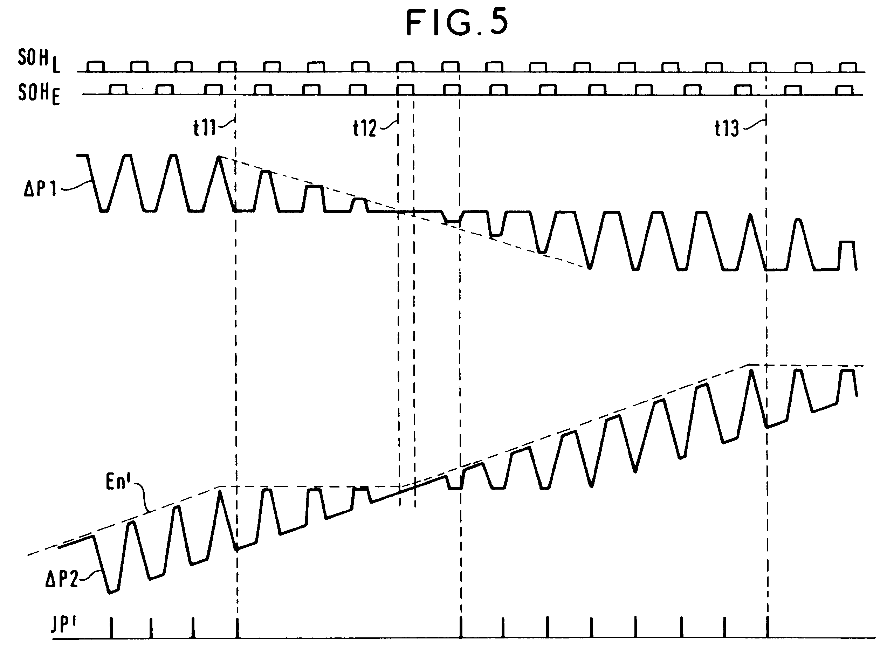

Les figures 4 et 5 représentent des chronogrammes expliquant pourquoi les signaux $JN'$ et $JP'$ de commande de justification positive, respectivement négative, présentent un tel intervalle vide $T_r'$. Pour plus de clarté ces figures ne respectent pas l'échelle qui permettrait de faire apparaître la séquence de 87 impulsions suivies d'une absence de 3 impulsions, dans les signaux de justification $JP'$ et $JN'$.

La première ligne de ces diagrammes représente le signal $DSOH_L$. La deuxième ligne représente le signal $DSOH_E$.

Il est à noter que la durée des impulsions des signaux $DSOH_L$ et $DSOH_E$ sont respectivement égales aux durées des en-têtes $SOH_E$ des rangées respectivement reçues par la borne d'entrée 1 et des en-têtes $SOH_L$ émises par la borne de sortie 10; et que la mémoire tampon 5 ne mémorise que les données transportées, et pas les en-têtes SOH des rangées transportant ces données.

La figure 4 représente des chronogrammes illustrant le fonctionnement d'un dispositif selon l'art antérieur, dans le cas où la fréquence de lecture des rangées d'un module de transport synchrone est inférieure à la fréquence d'écriture de ces rangées. La mémoire 5 a alors tendance à se saturer, mais l'intervention du seuil NF, qui est fixe selon l'art antérieur, tend à compenser l'effet de cet écart entre ces fréquences.

La troisième ligne du diagramme représente le graphe de la valeur $\Delta P1$ fournie par la sortie du soustracteur 12 dans le cas purement théorique où les horloges d'écriture et de lecture, $H_E$ et $H_L$, seraient rigoureusement à la même fréquence. Le décalage des pointeurs, $\Delta P1$, est alors uniquement le résultat de la différence de fréquence entre les signaux $DSOH_L$ et $DSOH_E$. Considérons, par exemple, l'intervalle de temps $t_1 t_2$ qui correspond à la durée d'une en-tête $SOH_E$ qui est reçue sur la borne d'entrée 1. Pendant cet intervalle, la borne de sortie 10 est en train d'émettre des données, et non pas une en-tête SOH. Par conséquent la mémoire tampon 5 tend à se vider, ce qui se traduit par une pente positive de l'écart $\Delta P1$ entre l'adresse de lecture et l'adresse d'écriture.

Considérons l'intervalle $t_3 t_4$ qui correspond à la durée d'une en-tête $SOH_L$ qui est émise ensuite sur la borne de sortie 10.

Pendant l'intervalle $t_2 t_3$ la borne d'entrée 1 reçoit des données de la charge utile et la borne de sortie 10 émet des données de la charge utile. Les horloges d'écriture et de lecture étant rigoureusement synchrones par hypothèse, l'écart $\Delta P1$ reste rigoureusement constant pendant cet intervalle.

Pendant l'intervalle $t_3 t_4$ la borne d'entrée 1 reçoit des données de la charge utile alors que la borne de sortie 10 émet une en-tête $SOH_L$. Il y a une écriture dans la mémoire tampon 5 alors qu'il n'y a pas de lecture puisque les en-têtes $SOH_E$ ne sont pas mémorisées dans la mémoire tampon 5 mais sont redéterminées par le dispositif 7. Par conséquent l'écart $\Delta P1$ a une pente négative correspondant à un remplissage de la mémoire tampon 5.

Il y a ainsi une suite de remplissages et de vidages partiels de la mémoire 5, se traduisant par une oscillation de $\Delta P1$ avec une amplitude constante, tant qu'il n'y a pas de recouvrement temporel d'une en-tête $SOH_L$ émise par la borne de sortie 10 et d'une en-tête $SOH_E$ reçue par la borne d'entrée 1.

Un tel recouvrement se produit à partir d'un instant $t_5$ où le front descendant du signal $DSOH_L$ coïncide avec un front montant du signal $DSOH_E$ et dure, jusqu'à un instant $t_7$ où ce recouvrement se termine lorsque un front montant du signal $DSOH_L$ coïncide avec un front descendant du signal $DSOH_E$. Pendant l'intervalle $t_5t_7$, la durée des remplissages et des vidages évolue en fonction du déphasage entre les signaux $DSOH_E$ et $DSOH_L$. Le graphe de l'écart $\Delta P1$ a une forme symétrique autour d'un intervalle de temps où il y a coïncidence de l'impulsion du signal $DSOH_L$ et de l'impulsion du signal $DSOH_E$. Cet intervalle débute à un instant remarquable $t_6$ où les deux fronts montants coïncident.

L'écart $\Delta P1$ présente des oscillations ayant une amplitude décroissant jusqu'à s'annuler pour $t_6$, puis croissant jusqu'à l'instant $t_7$. De l'instant $t_7$ jusqu'à un instant $t_8$, les en-têtes reçues et les en-têtes émises ne se recouvrant pas, la valeur de $\Delta P1$ oscille avec une amplitude constante comme pendant l'intervalle $t_1t_5$.

Considérons l'instant $t_8$ où le front descendant du signal $DSOH_L$ coïncide presque avec le front montant du signal $DSOH_E$. A partir de cet instant $t_8$ il va y avoir de nouveau un recouvrement temporel entre les en-têtes $SOH_L$ des rangées émises sur la borne de sortie 10 et les en-têtes $SOH_E$ reçues sur la borne d'entrée 1. Il y a de nouveau une suite de remplissages et de vidages partiels de la mémoire 5. L'écart $\Delta P1$ oscille avec une amplitude décroissante.

A un instant $t_9$ il y a de nouveau une coïncidence des fronts montants des signaux $DSOH_L$ et $DSOH_E$. Le graphe de $\Delta P1$ passe alors par un point où l'amplitude d'oscillation est nulle. Après l'instant $t_9$ il y a encore un recouvrement temporel entre les en-têtes des rangées émises et les entêtes des rangées reçues, et le graphe de $\Delta P1$ comporte de nouveau des oscillations d'amplitude croissante. Le graphe de l'écart $\Delta P1$ se répète donc périodiquement mais avec un décalage augmentant à chaque période.

La courbe $\Delta P2$ représente le graphe de l'écart $\Delta P2$ entre l'adresse courante de lecture et l'adresse courante de lecture, dans l'hypothèse où il y a en plus un décalage de la fréquence des horloges $H_E$ et $H_L$ commandant respectivement l'écriture et la lecture dans la mémoire tampon 5. Ce décalage se traduit par un glissement de phase régulier qui s'ajoute au déphasage représenté par la courbe $\Delta P1$.

Pour considérer le comportement du comparateur 15 par rapport aux valeurs de la courbe $\Delta P2$ considérons l'enveloppe En de cette courbe, passant par les valeurs minimales de cette courbe. Sa forme générale a une pente négative. Chaque intersection de cette enveloppe avec une valeur de seuil fixe NF' commande, grâce au comparateur 15, une justification négative. Sur la figure 4, le signal JN' représente les impulsions de commande de justification négative. L'écart $\Delta P2$ comporte des extrema qui franchissent le seuil NF à intervalles réguliers pendant les intervalles de temps $t_1t_5$, puis $t_6$ $t_8$, puis au-delà de l'instant $t_9$. Par contre, l'enveloppe En a un niveau constant, et par conséquent ne franchit plus le seuil NF' pendant les intervalles $t_5t_6$ et

$t_8t_9$. Il y a donc un trou dans la suite des impulsions du signal JN' pendant ces deux intervalles de temps.

Dans le cas où chaque rangée comporte une en-tête SOH de 18 quartets et une charge utile de 522 quartets, chaque période du signal de justification négative JN' comporte une suite de 87 impulsions à intervalles réguliers, suivie d'un intervalle vide qui correspondrait à trois impulsions.

La figure 5 représente les signaux $DSOH_L$, $DSOH_E$, $\Delta P1$, $\Delta P2$, et le signal JP' commandant une justification positive, dans le cas où la fréquence des en-têtes $SOH_L$ émises sur la borne de sortie 10 est supérieure à la fréquence des en-têtes $SOH_E$ reçues sur la borne d'entrée 1. La forme générale de l'écart $\Delta P2$ a alors une pente positive. Cet écart tend donc à rencontrer le seuil NE', qui est fixe dans le cas du dispositif selon l'art antérieur. Considérons alors l'enveloppe En' qui passe par les valeurs maximales du signal $\Delta P2$. Cette enveloppe comporte deux parties horizontales dans un intervalle de temps $t_{11}t_{12}$ et dans un intervalle de temps situé au-delà de $t_{13}$. Pendant ces intervalles de temps les valeurs maximales de l'écart $\Delta P2$ ne franchissent plus la valeur de seuil NE'. Par conséquent il n'y a pas émission d'impulsions de justification positive JP'. Chaque période du signal de justification positive JP' comporte une suite de 87 impulsions, suivie d'un intervalle vide correspondant à trois impulsions manquantes.

L'intervalle de temps $T'_r$ représenté sur la figure 3 correspond aux intervalles $t_5t_6$ et $t_8t_9$, sur la figure 4; $t_{11}t_{12}$ et $t_{13}$...sur la figure 5. Cet intervalle $T'_r$ est caractérisé par le fait que les en-têtes reçues $SOH_E$ et les entêtes émises $SOH_L$ ont un recouvrement temporel, et que les en-têtes émises $SOH_L$ ont un retard de phase par rapport aux en-têtes reçues $SOH_E$, pendant ce recouvrement. Cette caractéristique est utilisée pour commander une variation des valeurs de seuil.

Dans le dispositif selon l'invention l'écart $\Delta P$ a le même graphe $\Delta P2$ que dans le dispositif selon l'art antérieur, dans les deux cas représentés sur les figures 4 et 5. Par contre, les valeurs de seuil ne sont plus fixes, et varient de façon à provoquer l'émission d'impulsions du signal de justification négative JN, respectivement du signal de justification positive JP, pendant les intervalles de temps $t_5t_6$ et $t_8t_9$, respectivement $t_{11}t_{12}$ et l'intervalle commençant à l'instant t13. Ces valeurs de seuil variables sont notées NE et NF.

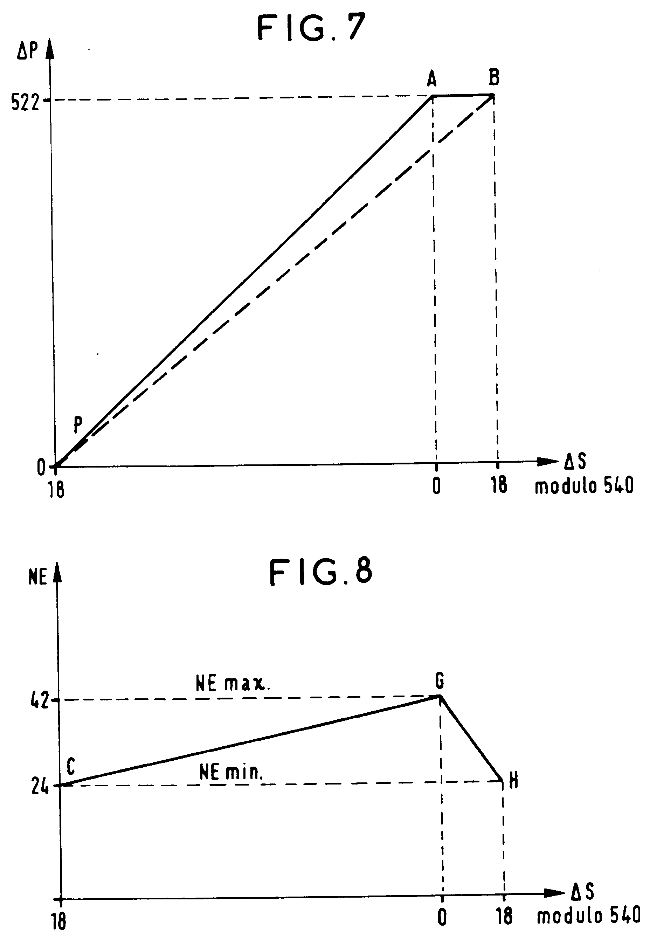

La figure 6 représente un chronogramme illustrant le fonctionnement du dispositif selon l'invention, en montrant le graphe de l'écart $\Delta P$ et le graphe du seuil NF variable, sur une première ligne, et les impulsions du signal JN commandant la justification négative, sur une seconde ligne. L'écart $\Delta P$ a une période $Tp = Tp'$ comportant une première partie au cours de laquelle il a une forme en dents de scie ayant une amplitude constante mais une valeur moyenne croissant linéairement, le sommet des dents de scie étant aligné sur le graphe de la valeur de seuil NF. Cette première partie comporte 84 dents. Pendant une seconde partie, de durée Tr = Tr' , le signal ΔP décroît en ayant la forme de trois marches d'escalier descendantes, ayant chacune une durée correspondant à la durée d'une dent de scie de la première partie. L'arête de ces marches d'escalier est alignée sur une droite, de pente négative, constituée par le graphe du seuil NF pendant cette seconde partie. Le signal JN ne comporte pas de période Tp, mais une période égale à la durée de chaque dent de scie et de chaque marche d'escalier du signal ΔP. Le signal JN comporte encore 87 impulsions pendant la durée Tp = Tp' , mais ces impulsions sont régulièrement réparties.

La variation du seuil NF intervient pour forcer le déclenchement du signal JN de justification négative pendant chaque intervalle $T_r$ La valeur de seuil NF est réduite de six quartets chaque fois que la justification négative provoque une décroissance de l'écart ΔP de six quartets, pendant cet intervalle $T_r$. Comme le seuil NF doit avoir une valeur qui reste voisine de la capacité maximale de la mémoire 5, il est incrémenté régulièrement pendant le reste de la période Tp de façon à l'augmenter de six quartets pendant l'intervalle $T_p - T_r$.

La valeur de seuil NE qui intervient au voisinage de l'assèchement de la mémoire tampon 5, est modulée de manière analogue.

Pour engendrer de tels valeurs de seuil NE et NF, dans l'exemple de réalisation sur la figure 2, le circuit 11 comporte :

- un compteur 20 ayant : une entrée d'horloge recevant le signal $H_L$, une entrée de validation recevant le signal $DSOH_E$ pour faire démarrer le compteur 20 sur le front montant de chaque en-tête SOH de rangée reçue sur la borne d'entrée 1, une entrée de remise à zéro pour arrêter et remettre à zéro le compteur 20 sur le front montant de chaque en-tête SOH de rangée émise sur la borne de sortie 10, et une sortie fournissant une valeur ΔS;
- un registre 21 ayant une entrée reliée à la sortie du compteur 20, et une entrée d'horloge recevant le signal $DSOH_L$ pour mémoriser la valeur ΔS avant que le compteur se remette à zéro;
- deux générateurs de fonction 22 et 23, constitués par exemple de deux mémoires mortes, ayant chacun une entrée reliée à la sortie du registre 21 et ayant chacun une sortie fournissant respectivement les valeurs NE et NF.

La valeur ΔS est comptée entre O et 54O. Elle représente, en nombre de quartets, le déphasage entre les en-têtes des rangées $SOH_E$ reçues et les en-têtes $SOH_L$ des rangées émises. Il y a un recouvrement temporel des en-têtes des rangées reçues et des rangées émises, et il y a un retard de phase des en-têtes émises sur la borne de sortie 10 par rapport aux en-têtes reçues sur la borne d'entrée 1, quand ΔS est compris entre O et 18, dans cet exemple de réalisation. L'intervalle $T_r$ représenté sur la figure 6, correspond donc aux valeurs ΔS = O à 18 (modulo 540).

Les figures 7 et 8 illustrent le fonctionnement du dispositif selon l'invention, et plus particulièrement le fonctionnement du générateur 22 pour fournir la valeur de seuil variable NE qui intervient lorsque la mémoire 5 est proche de l'assèchement. La figure 7 représente le graphe de l'écart ΔP entre les deux pointeurs, en fonction de l'écart ΔS, si le seuil NE est fixe. Ce graphe est dessiné comme s'il était continu alors que ΔP et ΔS varient en réalité par pas correspondant chacun à un quartet.

Sur cette figure 7 le tracé en traits continus représente l'écart ΔP réel dans la mémoire tampon 5, si la valeur de seuil NE est fixe; et le tracé en pointillés représente l'écart ΔP qu'il faudrait théoriquement pour obtenir un déclenchement de la justification positive à intervalles réguliers, avec un seuil NE fixe.

L'écart ΔP réel comporte un premier segment PA ayant une pente égale à 1, pour les valeurs de ΔS comprises entre 18 et 0 modulo 540 quartets, et un second segment AB de pente nulle pour les valeurs de ΔS comprises entre O et 18 modulo 540 quartets. Le graphe qui permettrait théoriquement d'obtenir un signal de commande de justification à intervalles réguliers est un segment PB dont la pente est égale à 522/540, et qui correspond à toute la plage de valeurs de ΔS s'étendant de O à 540 quartets.

La figure 8 représente le graphe du seuil NE en fonction de ΔS permettant d'obtenir un signal de commande de justification positive à intervalles réguliers, en compensant par une variation du seuil NE le fait que le graphe PAB ne coïncide pas avec le graphe PB. Il comporte un segment CG où le seuil NE varie de NEmin à NEmax lorsque ΔS varie de 18 à O, modulo 540 quartets; et un segment GH où le seuil NE redécroît de NEmax à NEmin lorsque Δs varie de O à 18 modulo 540 quartets. Pour compenser le fait que graphe PAB ne coïncide pas avec le graphe PB, à cause du segment AB de longueur égale à 18 quartets, il faut et il suffit que NEmax-NEmin = 18 quartets. La valeur moyenne de NE est choisie en fonction de la capacité de la mémoire tampon 5. Par exemple NEmin = 24 et NEmax = 42 quartets, pour une mémoire 5 ayant une capacité de 128 quartets.

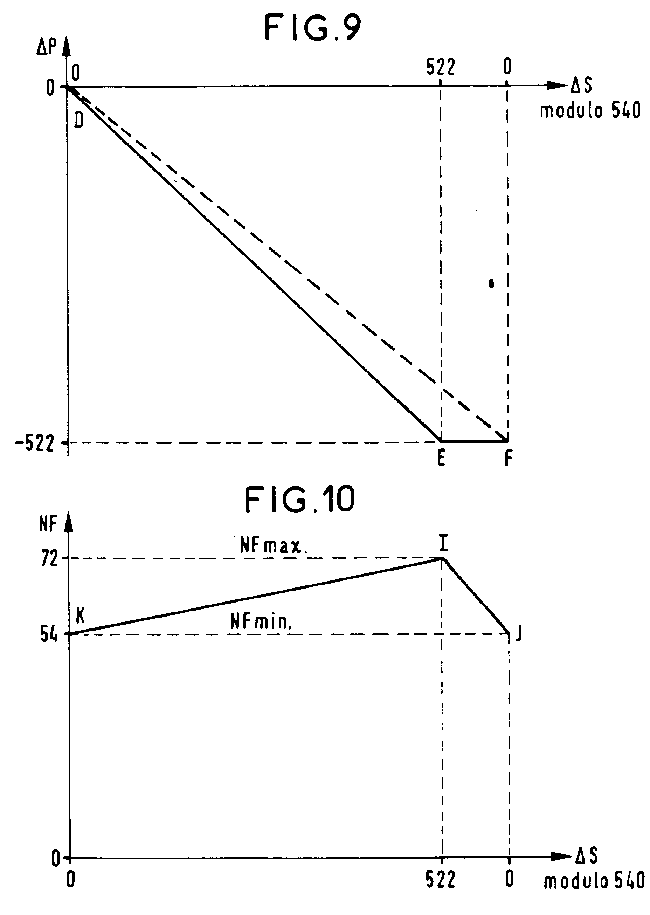

Les figures 9 et 10 illustrent de manière analogue le fonctionnement du circuit 11 dans le cas où la mémoire tampon 5 approche de la saturation. La figure 9 représente le graphe de l'écart ΔP en fonction de l'écart ΔS, variant entre O et 540 quartets, si le seuil NF est fixe. Le graphe de l'écart réel comporte un premier segment DE ayant une pente égale à -1, l'écart ΔP variant de O à -522 lorsque ΔS varie de O à 522 quartets; et comporte un second segment EF ayant une pente nulle, et une ordonnée ΔP=- 522, pour les valeurs de ΔS comprises entre 522 et O modulo 540 quartets. Le graphe de l'écart ΔP qui serait théoriquement nécessaire pour obtenir le déclenchement de la justification négative à intervalles réguliers, avec un seuil NF fixe, est un segment DF correspondant à une variation de l'écart ΔP de O à -522 quartets, pour une variation de ΔS de O à 540 modulo 540 quartets.

La figure 10 représente le graphe du seuil NF en fonction de l'écart ΔS, permettant d'obtenir un déclenchement de la justification négative à intervalles réguliers. Le graphe comporte un premier segment KI croissant d'une valeur NFmin à une valeur NFmax pour une variation de ΔS de O à 522 quartets; et un segment IJ décroissant de NFmax à NFmin pour ΔS variant de 522 à 540 quartets. L'amplitude NFmax - NFmin nécessaire et suffisante pour compenser l'effet du segment EF, est égale à 18 quartets. La valeur moyenne du seuil NF est choisie en fonction de la capacité de la mémoire tampon 5 qui est utilisée. Par exemple, NFmin = 64 quartets et NFmax = 82 quartets pour une mémoire 5 ayant une capacité de 128 quartets.

Les générateurs de fonction 22 et 23 peuvent être constitués chacun d'une mémoire morte contenant les valeurs correspondant aux graphes représentés sur les figures 8 et 9.

L'exemple de réalisation décrit ci-dessus est représenté sur la figure 2 permet d'obtenir une justification à intervalles parfaitement réguliers dans une passerelle d'un réseau synchrone à condition que le train numérique fourni à ce dispositif n'ait pas subi auparavant des justifications à intervalles irréguliers, car alors ces justifications antérieures perturbent la régularité des justifications dans le signal restitué par un dispositif tel que celui représenté sur la figure 2 .

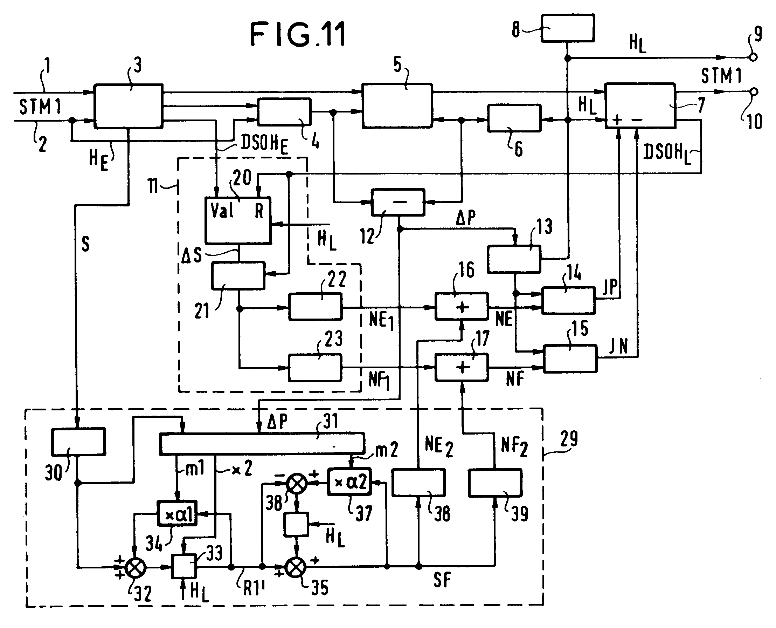

La figure 11 représente le schéma synoptique d'une variante de réalisation du dispositif selon l'invention, permettant d'atténuer les effets des justifications antérieures sur la régularité de la justification réalisée dans une passerelle donnée. Cette variante comporte les mêmes moyens que ceux représentés sur la figure 2, plus des moyens supplémentaires, car les valeurs de seuil NE et NF sont a lors constituées chacune de deux composantes :

$$NE = NE_1 + NE_2$$

$$NF = NF_1 + NF_2$$

Les valeurs $NE_1$ et $NF_1$ sont fournies par le circuit 11 décrit précédemment alors que les valeurs $NE_2$ et $NF_2$ sont fournies par des moyens supplémentaires 29. Les valeurs de seuil NE et NF sont calculées au moyen de deux additionneurs supplémentaires 16 et 17.

Les moyens supplémentaires 29 comportent :

- un dispositif 30 ayant une entrée reliée à une sortie du dispositif 3 d'extraction de conteneurs virtuels, pour convertir un signal S indicateur de justification positive-négative, en une valeur numérique positive, respectivement négative, prédéterminée, lorsqu'il indique une justification positive, respectivement négative;

- un processeur 31 ayant une première entrée reliée à une sortie du dispositif 30, et une seconde entrée reliée à la sortie du soustracteur 12 pour recevoir la valeur de l'écart ΔP entre l'adresse courante d'écriture et l'adresse courant de lecture;

- un additionneur 32 ayant deux entrées, dont une première entrée est reliée à la sortie du dispositif 30;

- un registre 33 ayant une entrée de données reliée à une sortie de l'additionneur 32, une entrée d'horloge recevant l'horloge $H_L$, et une entrée de commande de décalage reliée à une sortie du processeur 31;

- un multiplieur 34 ayant une entrée reliée à la sortie du registre 33, une entrée reliée à une sortie du processeur 31 lui fournissant une valeur de paramètre m1, et une sortie reliée à la seconde entrée de l'additionneur 32;

- un soustracteur 35 ayant deux entrées, dont une entrée est reliée à la sortie du registre 33;

- un multiplieur 37 ayant une entrée reliée à une sortie de l'additionneur 37, une entrée reliée à une sortie du processeur 31 lui fournissant une valeur de paramètre m2;

- un soustracteur 38 ayant deux entrées, dont une entrée "+" est reliée à une sortie du multiplieur 37 et une entrée "-" est reliée à la sortie du registre 33;

- un registre 36 ayant une entrée de données reliée à une sortie de l'additionneur 38, une entrée d'horloge recevant le signal d'horloge $H_L$, et une sortie reliée à la seconde entrée de l'additionneur 35;

- deux générateurs de fonction 38 et 39 ayant une entrée commune reliée à la sortie de l'additionneur 35, et ayant chacun une sortie fournissant respectivement les valeurs $NE_2$ et $NF_2$ à deux entrées des additionneurs 16 et 17 respectivement.

Les éléments 31 à 38 constituent un filtre numérique passe-haut à deux étages et à bande passante variable. Dans le premier étage, le multiplieur 34 réalise une multiplication par un coefficient

$$\alpha 1 = 1 - \frac{1}{2^{m1}}.$$

Dans le deuxième étage, le multiplieur 37 réalise une multiplication par un coefficient

$$\alpha 2 = 1 - \frac{1}{2^{m2}}.$$

La mémoire tampon 5 risquant de saturer pendant les transitoires, le processeur 31 élargit la bande passante du filtre 31 à 37 pendant les transitoires, afin d'éviter une telle saturation. Pour élargir cette bande passante il élargit la bande passante du filtre 31 à 37 en réduisant la valeur des paramètres m1 et m2 lorsqu'un transitoire provoque l'augmentation du remplissage de la mémoire tampon 5.

Le processeur 31 compare la valeur de l'écart ΔP traduisant l'état de remplissage de la mémoire tampon 12, à 3 valeurs de seuil S1, S2, S3, prédéterminées.

Le processeur 31 fournit les valeurs de paramètres m1, m2 suivantes :

| m1 | m2 | ΔP |
|----|----|-----|
| 16 | 16 | si ΔP < S1 |
| 14 | 13 | si S1 ≤ ΔP < S2 |
| 12 | 11 | si S2 ≤ ΔP < S3 |
| 11 | 10 | si S3 ≤ ΔP |

Lors d'un transitoire la valeur ΔP franchit successivement les valeurs de seuil S1, S2, S3. Le processeur 31 commute sans délai les valeurs m1 et les valeurs m2, lorsque les valeurs de seuil sont franchies.

Les valeurs m1 = 11 et m2 = 10 procurent une bande passante du filtre 31 à 37 suffisamment large pour qu'un transitoire ne provoque pas de débordement de la mémoire tampon 5, qui dans cet exemple a une capacité de 128 quartets.

Selon un mode de réalisation préférentiel, le processeur 31 ne décrémente qu'un seul des paramètres m1 et m2 à la fois. Par exemple il modifie les valeurs m1 et m2 conformément au tableau suivant :

| m1 | m2 | ΔP |
|----|----|-----|
| 16 | 16 | ΔP < S1' |
| 14 | 16 | S1' ≤ ΔP < S2' |
| 14 | 13 | S2' ≤ ΔP < S3' |
| 12 | 13 | S3' ≤ ΔP < S4' |
| 12 | 11 | S4' ≤ ΔP < S5' |
| 11 | 11 | S5' ≤ ΔP < S6' |
| 11 | 10 | S6' ≤ ΔP |

Le procédé consistant à changer les valeurs des paramètres m1 et m2 en alternance permet de minimiser la gigue de phase créée par le changement de caractéristiques du filtre 31 à 37. Dans le cas d'un transitoire de forte amplitude l'écart ΔP franchit très rapidement plusieurs valeurs de seuil, et le processeur 31 saute alors plusieurs valeurs de m1 et m2.

Dans un mode de réalisation préférentiel, chaque fois que le processeur 31 diminue la valeur du paramètre m1 de k unités (k entier), il commande simultanément un décalage dans le registre 33 pour diviser par $2^k$ le contenu de ce registre. Ceci a pour effet de diviser par $2^k$ instantanément la valeur R1' fournie par ce premier étage du filtre, et donc de réduire le temps nécessaire pour la stabilisation de la valeur R1' fournie en sortie du premier étage du filtre. En effet, on démontre que cette valeur est proportionnelle à $2^{m1}$. Lorsque m1 est incrémenté d'une unité la valeur fournie par ce premier étage tend asymptotiquement vers une valeur qui est doublée. Le fait de multiplier par $2^k$ la valeur fournie par la sortie du premier étage, rapproche beaucoup la valeur fournie de sa valeur finale. La valeur fournie arrive donc plus vite à la valeur finale correspondant à la nouvelle valeur de m1.

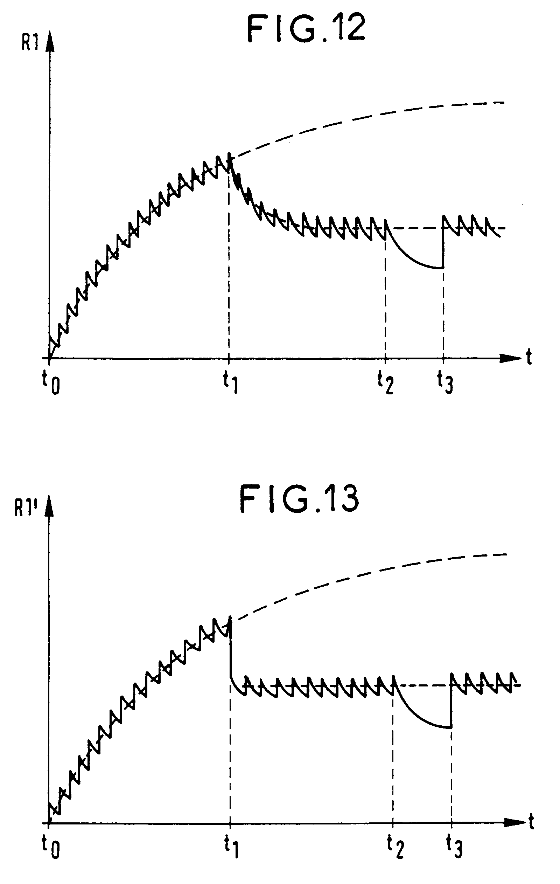

Les figures 12 et 13 illustrent le fonctionnement du premier étage 32, 33, 34 du filtre 7' selon cette variante de réalisation, au moment d'un transitoire.

La figure 12 représente le graphe de la valeur R1 fournie par la sortie du premier étage dans le cas où une décrémentation du paramètre m1 est réalisée sans diviser par deux la valeur fournie par la sortie du premier étage. La figure 13 représente le graphe de la valeur R1' fournie par la sortie du premier étage dans le cas où la valeur R1' est divisée par deux par un décalage dans le registre 33, à l'instant où la valeur m1 est décrémentée.

A l'instant $t_0$ commence une séquence de 87 justifications positives ou négatives, chaque justification se traduisant par une dent de scie ayant un segment de pente positive pratiquement infinie, et un segment de pente négative descendant de manière exponentielle. A l'instant $t_1$ la valeur m1 est incrémentée d'une unité. Pendant l'intervalle de temps $t_0$ $t_1$ l'enveloppe du graphe de R1 a une forme exponentielle croissant avec une certaine constante de temps qui est identique pour les deux figures.

Dans le cas représenté sur la figure 12, à l'instant $t_1$ le processeur 31 détecte que l'écart ΔP est devenu supérieur à une valeur de seuil. Le processeur 31 réduit la valeur m1 d'une unité pour augmenter la bande passante du filtre 7'. La constante de temps est donc réduite. Le graphe de R1 tend alors asymptotiquement vers la même valeur finale résultant du changement de m1, mais avec une pente plus raide.

Dans le cas représenté sur la figure 13, la division par deux provoque une diminution brutale de la valeur R1' fournie par le premier étage jusqu'à une valeur très proche de la valeur finale, à quelques pourcents près. La valeur R1' fournie par le premier étage atteint donc plus rapidement un état stable, ce qui réduit la gigue de phase provoquée par le changement de la valeur m1.

Les figures 12 et 13 représentent aussi la variation de la valeur fournie par le premier étage, respectivement la valeur R1 et la valeur R1', entre des instants $t_2$ et $t_3$ entre lesquels il n'y a aucune justification. L'absence de justification se traduit par une diminution des valeurs R1 et R'1. Cette diminution s'arrête au début d'une nouvelle séquence de justifications.

Chaque décrémentation des paramètres m1 et m2 est effectuée par le processeur 31 en phase avec le signal S indiquant une justification, afin de réduire l'erreur due à une division réalisée par un décalage dans le registre 33.

Lorsque l'évènement transitoire qui a augmenté le remplissage de la mémoire 12 est terminé, le processeur 31 détecte que la valeur $\Delta P$ est redevenue inférieure à la plus grande valeur de seuil atteinte pendant le transitoire. Il lance un temporisateur. Quand il constate que cet événement a duré pendant une durée $T_0$, il change alors les valeurs des paramètres m1 et m2 selon une séquence prédéterminée qui est fonction du temps seulement : toutes les $T_1$ secondes il incrémente la valeur d'une unité de m1, puis il incrémente d'une unité la valeur de m2 avec un décalage initial de $\frac{T_1}{2}$, puis ensuite à intervalles réguliers de $T_1$ secondes, pour revenir aux valeurs initiales m1 = 16 et m2 = 16, afin de réduire la bande passante du filtre 7'. Le fait de décaler l'incrémentation de m1 et de m2 réduit la gigue de phase produite par le changement de caractéristique du filtre, correspondant à chaque changement de valeur de m1 ou de m2.

L'incrémentation de m1 et m2 est réalisée par pas d'une unité pour minimiser la gigue de phase engendrée par ce changement de paramètre.

Lorsque la valeur de m1 est incrémentée d'une unité, le processeur 31 commande aussi le registre 33 pour réaliser un décalage multipliant par 2 la valeur R1' fournie par la sortie du premier étage du filtre.

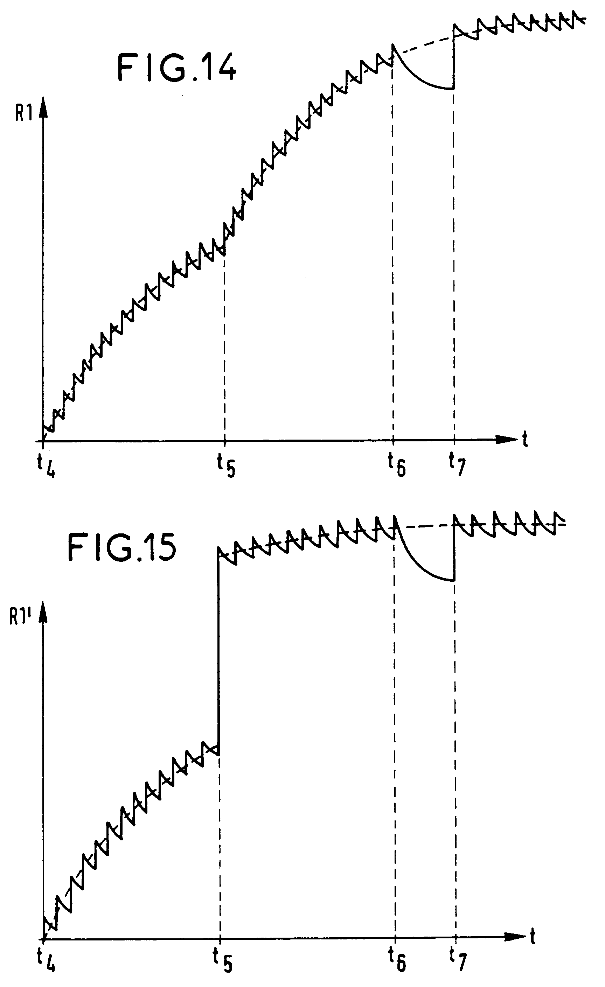

La figure 14 représente le graphe de la valeur R1 fournie par la sortie du premier étage 32, 33, 34 du filtre pendant le retour à l'état stable, en l'absence de décalage dans le registre 33. A l'instant $t_4$ commence une séquence de 87 justifications positives ou négatives. A l'instant $t_5$ la valeur m1 est décrémentée d'une unité. Pendant l'intervalle de temps $t_4t_5$ l'enveloppe du graphe de R1 a une forme exponentielle croissant avec une certaine constante de temps. Après l'instant t5 elle a une forme exponentielle décroissant avec une pente plus raide. Le graphe tend alors asymptotiquement vers la même valeur finale mais avec une pente plus raide.

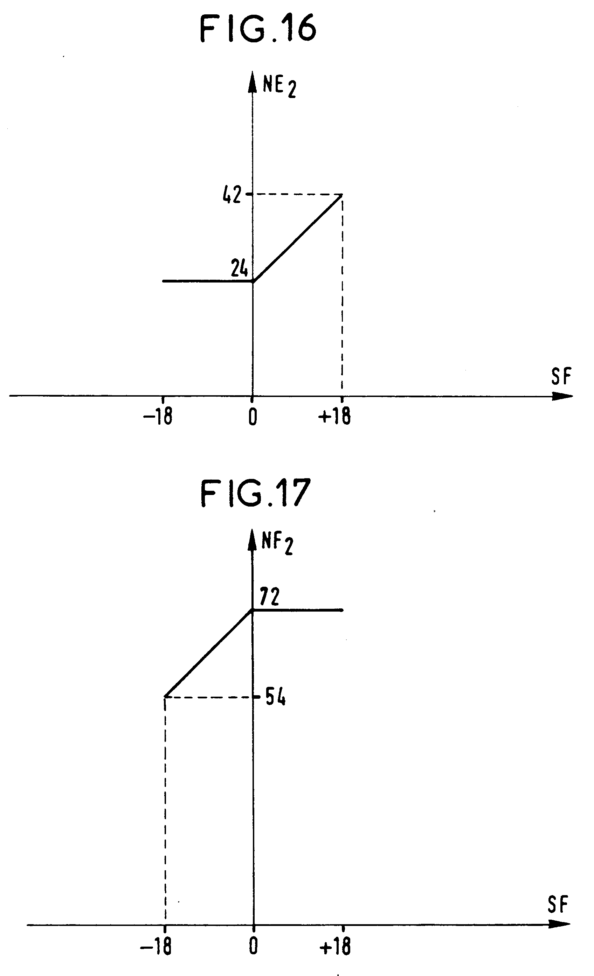

La figure 15 représente le graphe de la valeur R'1 fournie par la sortie du premier étage 32, 33, 34 du filtre pendant ce retour à l'état stable, mais avec un décalage d'un bit dans le registre 33. La multiplication par deux provoque une augmentation de la valeur R1' fournie par le premier étage jusqu'à une valeur très proche de la valeur finale, à quelques pourcents près.

La valeur R1' fournie par le premier étage atteint donc plus rapidement un état stable, ce qui réduit la gigue de phase provoquée par le changement de la valeur de m1.

Les figures 14 et 15 représentent aussi la variation de la valeur fournie par le premier étage, respectivement la valeur R1 et la valeur R1', entre des instants $t_6$ et $t_7$ entre lesquels il n'y a aucune justification. L'absence de justification se traduit par une diminution des valeurs R1 et R1' temporairement.

Chaque incrémentation du paramètre m1 est réalisée par le processeur 31 en phase avec l'arrivée du signal S d'indication de justification afin de minimiser les erreurs de calcul lors de la multiplication réalisée par un décalage dans le registre 33. Cette synchronisation permet de prendre pour la multiplication une valeur qui est la plus proche possible de la valeur finale.

Pour la même raison, avant d'incrémenter le paramètre m1 ou m2, le processeur 31 vérifie qu'il n'y a pas eu de trou dans la suite de justifications qui a lieu pendant la période $T_0$ de temporisation. Toutefois il est nécessaire d'assurer que cette vérification ne bloque pas la possibilité d'incrémenter les paramètres m1 et m2 pendant une longue période où il n'y aurait aucune justification, et où la mémoire tampon serait en danger de saturation ou d'assèchement.

Pour assurer cette sécurité, le processeur 31 compare en permanence la valeur $\Delta P$ à une valeur de seuil haute et à une valeur de seuil basse, et déclenche sans délais la décrémentation des paramètres m1 et m2 si l'une de ces valeurs de seuil est franchie. La valeur de seuil haute est fixée à une valeur supérieure à S'6, et la valeur de seuil basse est fixée à une valeur inférieure à S'O, dans cet exemple.

Pour assurer que le filtre ne reste pas avec une bande passante élargie, le processeur 31 lance une temporisation lors de l'arrivée de chaque signal de justification S. Si ce signal disparaît pendant un délai T2 fixé, et s'il n'y a aucun franchissement de seuil pendant ce délai, le processeur 31 commence la séquence des changements de m1 et m2 pour ramener le filtre à l'état initial.

Le circuit 29 fournit des valeurs de seuil variables NE2 et NF2 qui varient respectivement dans les mêmes plages que les valeurs NE1 et NF1, mais elles varient en fonction du signal S filtré, dans le but de déclencher des justifications supplémentaires ayant pour but de réparer les absences de justification qui peuvent être constatées dans les séquences de 87 justifications consécutives que la borne 1 est censée recevoir.

Les générateurs de fonction 22 et 23 de la variante de réalisation représentée sur la figure 11 fournissent des valeurs NE1 et NF1 qui sont respectivement égales aux valeurs NE et NF dont les graphes sont représentés sur les figures 8 et 10.

La figure 16 représente le graphe de la fonction NE2, engendrée par le générateur de fonction 38, en fonction de la valeur SF du signal filtré par le filtre 31 à 37. Pour les valeurs négatives du signal filtré le générateur 38 fournit une valeur NE2 constante, égale à 24 quartets. Pour les valeurs positives il fournit une valeur NE2 croissant linéairement avec une pente égale +1 : une variation de O à +18 du signal filtré provoque une augmentation de NE2 de 24 à 42 quartets. L'amplitude des valeurs numériques fournies par le positif 30 de conversion analogique-numérique est choisie telle que l'amplitude du signal filtré reste comprise en -18 et +18.

La figure 17 représente le graphe de la fonction NF2 engendrée par le générateur de fonction 39. Pour les valeurs positives du signal filtré SF il fournit une valeur NF2 constante, égale à 72 quartets. Pour les valeurs négatives du signal filtré SF il fournit une valeur NF2 croissant avec une pente égale + 1 : pour une variation de -18 à O du signal filtré SF, il fournit une valeur NF2 variant de 54 à 72 quartets. Les valeurs $NE_2$ et $NF_2$ varient donc avec une amplitude de 18 quartets, comme les valeurs $NE_1$ et $NF_1$.

Selon un mode de réalisation préférentiel, les générateurs de fonction 22 et 23 sont commandés en outre par l'écart $\Delta P$ traduisant le remplissage de la mémoire tampon, pour que ceux-ci ne fournissent qu'une seule valeur de seuil à la fois : NF si le remplissage est supérieur à la moitié de la capacité de la mémoire tampon; et NE si le remplissage est inférieur à la moitié de la capacité. Ainsi il est possible de doubler l'amplitude de variation des seuils sans réduire la plage où le remplissage peut varier sans déclencher de justification, par rapport au cas où les deux seuils NE et NF seraient fournis simultanément aux comparateurs 14 et 15 respectivement.

Selon une variante de réalisation les fonctions des générateurs de fonction 22, 23, 38, 39, peuvent être commutables pour engendrer des fonctions particulières destinées à produire des justifications selon des séquences particulières, pour tester des équipements du réseau synchrone situé en aval.

**Revendications**

1. Dispositif pour justifier à intervalles réguliers un train numérique en provenance d'une première liaison synchrone (1) cadencée par une première horloge ($H_E$), et qui est à émettre sur une seconde liaison synchrone (10) cadencée par une seconde horloge ($H_L$); ce train binaire étant une suite continue de rangées de bits, chaque rangée étant constituée d'un nombre total de bits fixé, mais comportant une charge utile constituée d'un nombre variable de bits, et une en-tête (SOH, PT) constituée d'un nombre variable de bits, ces nombres de bits variant selon que cette rangée a subi une justification positive, une justification négative, ou aucune justification;
comportant :

- une mémoire tampon (5) pour stocker la charge utile, à la cadence de la première horloge, et la restituer à la cadence de la seconde horloge;
- des moyens (12, 13) pour calculer la valeur du remplissage ($\Delta P$) de la mémoire tampon (5);
- des moyens (14, 15) pour comparer la valeur du remplissage à une première et à une seconde valeur de seuil (NF, NE); pour produire un signal de commande de justification négative (JN) lorsqu'elle est supérieure à la première valeur de seuil (NF); et pour produire un signal de commande de justification positive (JP) lorsqu'elle est inférieure à la seconde valeur de seuil (NE);

caractérisé en ce que la première et la seconde valeur de seuil sont variables;
et en ce qu'il comporte des moyens (11, 16, 17, 29) pour déterminer une première et une seconde valeur de seuil variables (NF, NE), ces moyens déterminant ces deux valeurs de seuil en fonction du déphasage ($\Delta S$) entre l'en-tête ($SOH_E$) d'une rangée reçue en provenance de la première liaison (1) et l'en-tête ($SOH_L$) d'une rangée émise sur la seconde liaison (10).

2. Dispositif selon la revendication 1, caractérisé en ce que les moyens (11, 16, 17, 29) pour déterminer une première et une seconde valeur de seuil (NF, NE) en fonction du déphasage ($\Delta S$) comportent :

- des moyens (20) pour fournir une valeur ($\Delta S$) traduisant le déphasage entre l'en-tête d'une rangée reçue ($SOH_E$) et l'en-tête d'une rangée émise ($SOH_L$);
- et deux premiers générateurs de fonction (22, 23) commandés par la valeur ($\Delta S$) traduisant ce déphasage, et fournissant respectivement deux valeurs de seuil (NE, NF).

3. Dispositif selon la revendication 1, caractérisé en ce que les deux générateurs de fonction (22, 23) engendrent chacun une fonction en dent de scie :

- une première pente de la dent de scie (GH ; IJ) correspondant à un premier intervalle de temps ($T_r$; $t_5t_6$; $t_{11}t_{12}$) où le déphasage entre l'en-tête d'une rangée reçue ($SOH_E$) et l'en-tête d'une rangée émise ($SOH_L$) est tel que cette dernière en-tête a un retard de phase par rapport à l'autre, et tel qu'il y a un recouvrement temporel entre ces deux en-têtes;
- une seconde pente de la dent de scie (OG; OI) correspondant à un second intervalle de temps ($T_p$-$T_r$; $t_1t_5$, $t_6t_7$) où ces deux conditions ne sont pas satisfaites simultanément.

4. Dispositif selon la revendication 1, caractérisé en ce que les moyens (11, 16, 17, 29) pour déterminer une première et une seconde valeur de seuil variable (NF, NE) les déterminent en outre en fonction d'un signal indicateur de justification (S) indiquant qu'une rangée a subi, ou non, une justification.

5. Dispositif selon la revendication 4, caractérisé en ce que les moyens (11, 16, 17, 29) pour déterminer une première et une seconde valeur de seuil (NF, NE) comportent :

   - un compteur (20) fournissant une valeur ($\Delta S$) traduisant le déphasage entre l'en-tête d'une rangée reçue ($SOH_E$) et l'en-tête d'une rangée émise ($SOH_L$);
   - deux premiers générateurs de fonction (22, 23) commandées par la valeur ($\Delta S$) traduisant ce déphasage et fournissant respectivement deux valeurs (NE1, NF1);
   - un filtre numérique passe-haut (31 à 37) pour filtrer le signal indicateur de justification (S);
   - deux seconds générateurs de fonction (38, 39) commandés par le signal filtré, et fournissant respectivement deux valeurs (NE2, NF2);
   - des moyens (16, 17) pour calculer la première et la seconde valeur de seuil (NE, NF) en additionnant respectivement une valeur (NE1; NF1) fournie par les premiers générateurs de fonction (22, 23), et une valeur (NE2; NF2) fournie par les seconds générateurs de fonction (38, 39).

6. Dispositif selon la revendication 5, caractérisé en ce que le filtre numérique (31 à 37) est un filtre passe-haut dont la bande passante est variable et est déterminée par la valeur d'au moins un paramètre (m1, m2); et en ce qu'il comporte des moyens (30, 31) pour déterminer la valeur de chaque paramètre du filtre en fonction du remplissage ($\Delta P$) de la mémoire tampon (5), de façon à augmenter la bande passante du filtre lorsqu'un transitoire tend à saturer cette mémoire.

7. Dispositif selon la revendication 6, caractérisée en ce que les moyens (30, 31) pour déterminer la valeur d'au moins un paramètre modifient la valeur d'au moins un paramètre dans le sens d'une augmentation de la bande passante si le remplissage ($\Delta P$) de la mémoire (12) devient supérieur à une valeur de seuil prédéterminée et en synchronisme avec les justifications, de façon à modifier la valeur de ce paramètre juste avant une justification; en ce qu'ils modifient la valeur d'au moins un paramètre dans le sens d'une réduction de la bande passante :

   - si le remplissage devient inférieur à une valeur de seuil prédéterminée;
   - et si la condition précédente est satisfaite pendant une durée ($T_0$) prédéterminée;
   - et si ces moyens détectent une suite de justifications ne comportant pas d'interruption pendant cette durée ($T_0$) prédéterminée.

8. Dispositif selon la revendication 6, caractérisée en ce que la bande passante du filtre (31 à 37) est déterminée par au moins deux paramètres (m1, m2); en ce que les moyens (30, 31) pour déterminer la valeur de chaque paramètre du filtre comparent la valeur du remplissage à plusieurs valeurs de seuil fixées et distinctes; et en ce qu'ils ne modifient qu'un seul paramètre (m1, m2) à la fois, quand le remplissage devient supérieur, respectivement, inférieur à une des valeurs de seuil.

9. Dispositif selon la revendication 6, dans laquelle le filtre (31 à 37) comporte au moins deux étages et dans laquelle la valeur finale fournie par le premier étage (32 à 34) est multipliée, respectivement divisée par deux, lorsque la valeur d'un paramètre augmente, respectivement diminue, d'une unité; caractérisée en ce que le premier étage (31 à 34) comporte en outre des moyens (31, 33) pour multiplier, respectivement diviser, par $2^k$ la valeur fournie par ce premier étage et des moyens (31) pour commander les moyens pour multiplier, respectivement diviser, lorsque les moyens (31) pour déterminer la valeur de chaque paramètre déterminent pour le premier étage une modification de paramètre égale à +k , respectivement -k, k étant un nombre entier non nul.

10. Dispositif selon la revendication 5, caractérisé en ce que le signal indicateur de justification (S) prend temporairement deux valeurs numériques de signes opposés pour indiquer respectivement une justification positive et une justification négative et prend une valeur nulle en l'absence de justification; et en ce que les seconds générateurs de fonction (38, 39) engendrent respectivement les fonctions suivantes :

   - une fonction (NE2) croissant linéairement en fonction du signal de justification filtré (S8) lorsque ce dernier indique une justification positive et ayant une valeur fixe prédéterminée, lorsqu'il indique une justification négative ou une absence de justification;
   - une fonction (NF2) croissant linéairement en fonction du signal de justification filtré (SF) lorsque ce dernier indique une justification négative; et ayant une valeur fixe prédéterminée, lorsqu'il indique une justification positive ou une absence de justification.

## Claims

1. Device for justifying at regular intervals a digital bit stream received from a first synchronous link (1) timed by a first clock ($H_E$) and to be sent on a second synchronous link (10) timed by a second clock ($H_L$), said binary bit stream comprising a continuous sequence of rows of bits, each row comprising a fixed total number of bits but including a payload comprising a variable number of bits and a header (SOH, PT) comprising a variable number of bits, the numbers of bits varying according to whether said row has been subjected to positive justification, negative justification or no justification, the device including:

   - a buffer memory (5) into which said payload is written under the control of said first clock and from which said payload is read under the control of said second clock;
   - means (12, 13) for calculating a value ($\Delta P$) indicative of how full said buffer memory (5) is;
   - means (14, 15) for comparing said filling value to first and second threshold values (NF, NE) to produce a negative justification command signal (JN) when it is greater than said first threshold value (NF) and to produce a positive justification command signal (JP) when it is less than said second threshold value (NE);
   - characterised in that the first and second threshold values are variable;
   - and in that the device includes means (11, 16, 17, 29) for determining first and second variable threshold values (NF, NE) according to the phase difference ($\Delta S$) between the header ($SOH_E$) of a row received from said first link (1) and the header ($SOH_L$) of a row sent on said second link (10).

2. Device according to claim 1 characterised in that said means (11, 16, 17, 29) for determining said first and second threshold values (NF, NE) as a function of the phase difference ($\Delta s$) include:

   - means (20) for supplying a value ($\Delta S$) representing the phase difference between the header of a row received ($SOH_E$) and the header of a row sent ($SOH_L$); and
   - two first function generators (22, 23) operating under the control of said value ($\Delta S$) representing said phase difference and supplying two respective threshold values (NE, NF).

3. Device according to claim 1 characterised in that each of said two function generators (22, 23) generates a sawtooth function:

   - a first slope of the sawtooth (GH; IJ) corresponding to a first time interval ($T_r$; $t_5t_6$; $t_{11}t_{12}$) in which said phase difference between the header of a row received ($SOH_E$) and the header of a row sent ($SOH_L$) is such that the latter header has a phase delay relative to the former header and the two headers overlap in time;

   - a second slope of the sawtooth (OG; OI) corresponding to a second time interval ($T_P$-$T_r$; $t_1t_5$, $t_6t_7$) in which the above two conditions are not satisfied simultaneously.

4. Device according to claim 1 characterised in that said means (11, 16, 17, 29) for determining said first and second variable threshold values (NF, NE) are also responsive to a justification indicator signal (S) indicating whether a row has been subjected to justification or not.

5. Device according to claim 4 characterised in that said means (11, 16, 17, 29) for determining said first and second threshold values (NF, NE) include:

   - a counter (20) supplying a value ($\Delta s$) representing said phase difference between the header of a row received ($SOH_E$) and the header of a row sent ($SOH_L$);
   - two first function generators (22, 23) operating under the control of said value ($\Delta S$) representing said phase difference and supplying two respective values (NE1, NF1);
   - a high-pass digital filter (31 through 37) for filtering said justification indicator signal (S);
   - two second function generators (38, 39) operating under the control of the filtered signal and supplying respective values (NE2, NF2); and
   - means (16, 17) for calculating said first and second threshold values (NE, NF) by respectively adding a value (NE1; NF1) supplied by said first function generators (22, 23) and a value (NE2; NF2) supplied by said second function generators (38, 39).

6. Device according to claim 5 characterised in that said digital filter (31 through 37) is a variable bandwidth high-pass filter in which the bandwidth is determined by the value of at least one parameter (m1, m2), and in that the device includes means (30, 31) for determining the value of each filter parameter according to how full ($\Delta P$) said buffer memory (5) is, in order to increase the bandwidth of said filter if a transient tends to saturate said memory.

7. Device according to claim 6 characterised in that said means (30, 31) for determining the value of at least one parameter modify the value of at least one parameter in a direction to increase said bandwidth if said memory (12) is full (ΔP) to above a predetermined threshold value and in synchronism with justification, in order to modify the value of said parameter just before a justification;

in that they modify the value of at least one parameter in a direction to reduce said bandwidth:

- if the buffer becomes full to less than a predetermined threshold value; and
- if the above condition is satisfied for a predetermined time ($T_0$); and
- if these means detect a series of justifications with no interruption during said predetermined time ($T_0$).

**8.** Device according to claim 6 characterised in that the bandwidth of said filter (31 through 37) is determined by at least two parameters (m1, m2) and in that said means (30, 31) for determining the value of each filter parameter compare said filling value to a plurality of separate fixed threshold values and in that they modify only one parameter (m1, m2) at a time when said filling value becomes respectively greater than or less than one of the threshold values.

**9.** Device according to claim 6 in which said filter (31 through 37) includes at least two stages and in which the final value supplied by the first stage (32 through 34) is respectively multiplied or divided by two when the value of a parameter is increased or decreased by one unit,

characterised in that said first stage (31 through 34) further includes means (31, 33) for multiplying or dividing by $2^k$ the value supplied by said first stage and means (31) for controlling the multiplying or dividing means when the means (31) for determining the value of each parameter determine for said first stage a parameter modification equal to +k or -k, respectively, where k is a non-null integer.

**10.** Device according to claim 5 characterised in that said justification indicator signal (S) temporarily assumes two values of opposite sign to indicate positive justification and negative justification, respectively, and assumes a null value in the absence of any justification;

and in that said second function generators (38, 39) respectively generate the following functions:

- a function (NE2) increasing linearly with the filtered justification signal (S8) when the latter indicates positive justification and having a predetermined fixed value when it indicates negative justification or no justification; and
- a function (NF2) increasing linearly with the filtered justification signal (SF) when the latter indicates negative justification and having a predetermined fixed value when it indicates positive justification or no justification.

## Patentansprüche

**1.** Anordnung zum Stopfen einer digitalen Impulsfolge, die von einer ersten durch einen ersten Taktgeber ($H_E$) getakteten, synchronen Verbindung (1) stammt, und die auf einer zweiten durch einen zweiten Taktgeber ($H_L$) getakteten, synchronen Verbindung (10) zu senden ist, in regelmäßigen Abständen; wobei diese binäre Impulsfolge eine kontinuierliche Folge von Bitreihen ist, wobei jede Reihe aus einer gestgelegten Gesamtzahl von Bits besteht aber eine Nutzlast, die aus einer veränderlichen Anzahl von Bits besteht, und einen Kopf (SOH, PT) umfasst, der aus einer veränderlichen Anzahl von Bits besteht, wobei sich diese Bitanzahlen je nachdem ändern, ob diese Reihe ein Positivstopfen, ein Negativstopfen oder kein Stopfen erfahren hat;

welche umfasst:

- einen Pufferspeicher (5), um die Nutzlast mit dem Takt des ersten Taktgebers zu speichern und sie mit dem Takt des zweiten Taktgebers wiederzugeben;
- Mittel (12, 13) zum Berechnen des Wertes der Auffüllung (?P) des Pufferspeichers (5);
- Mittel (14, 15) zum Vergleichen des Wertes der Auffüllung mit einem ersten und einem zweiten Schwellenwert (NF, NE); um ein Steuersignal für ein Negativstopfen (JN) zu erzeugen, wenn er größer als der erste Schwellenwert (NF) ist; um eine Steuersignal für ein Positivstopfen (JP) zu erzeugen, wenn er kleiner als der zweite Schwellenwert (NE) ist;

dadurch gekennzeichnet, dass der erste und der zweite Schwellenwert veränderlich sind;

und dass sie Mittel (11, 16, 17, 29) zum Bestimmen eines ersten und eines zweiten veränderlichen Schwellenwerts (NF, NE) umfasst, wobei diese Mittel diese beiden Schwellenwerte in Abhängigkeit von der Phasenverschiebung (ÄS) zwischen dem Kopf ($SOH_E$) einer empfangenen Reihe, die von der ersten Verbindung (1) stammt, und dem Kopf ($SOH_L$) einer Reihe bestimmt, der auf der zweiten Verbindung (10) gesendet wird.

**2.** Anordnung nach Anspruch 1, dadurch gekennzeichnet, dass die Mittel (11, 16, 17, 29) zum Bestimmen eines ersten und eines zweiten Schwellenwerts (NF, NE) in Abhängigkeit von der Phasenverschiebung (?S) umfassen:

- Mittel (20) zum Liefern eines Wertes (ÄS), der die Phasenverschiebung zwischen dem Kopf (SOH$_E$) einer empfangenen Reihe und dem Kopf (SOH$_L$) einer gesendeten Reihe umsetzt;

- und zwei erste Funktionsgeneratoren (22, 23), die durch den diese Phasenverschiebung umsetzenden Wert (ÄS) gesteuert werden und entsprechend zwei Schwellenwerte (NE, NF) liefern.

3. Anordnung nach Anspruch 1, dadurch gekennzeichnet, dass die beiden Funktionsgeneratoren (22, 23) jeweils eine Sägezahnfunktion erzeugen:

- wobei eine erste Steigung des Sägezahns (GH; IJ) einem ersten Zeitintervall (T$_r$; t$_5$t$_6$; t$_{11}$t$_{12}$) entspricht, bei dem die Phasenverschiebung zwischen dem Kopf (SOH$_E$) einer empfangenen Reihe und dem Kopf (SOH$_L$) einer gesendeten Reihe derart ist, dass dieser letztere Kopf in bezug auf den anderen eine Phasenverzögerung aufweist, und derart, dass es eine zeitliche Überlappung zwischen diesen beiden Köpfen gibt;
- wobei eine zweite Steigung des Sägezahns (OG; OI) einem zweiten Zeitintervall (T$_p$-T$_r$; t$_1$t$_5$, t$_6$t$_7$) entspricht, bei dem diese beiden Bedingungen nicht gleichzeitig erfüllt sind.

4. Anordnung nach Anspruch 1, dadurch gekennzeichnet, dass die Mittel (11, 16, 17, 29) zum Bestimmen eines ersten und eines zweiten veränderlichen Schwellenwerts (NF, NE) sie außerdem in Abhängigkeit von einem Hinweissignal für ein Stopfen (S) bestimmen, das angibt, dass eine Reihe ein Stopfen erfahren hat oder nicht.

5. Anordnung nach Anspruch 4, dadurch gekennzeichnet, dass die Mittel (11, 16, 17, 29) zum Bestimmen eines ersten und eines zweiten Schwellenwertes (NF, NE) umfassen:

- einen Zähler (20), der einen Wert (?S) liefert, der die Phasenverschiebung zwischen dem Kopf (SOH$_E$) einer empfangenen Reihe und dem Kopf (SOH$_L$) einer gesendeten Reihe umsetzt;
- zwei erste Funktionsgeneratoren (22, 23), die durch den diese Phasenverschiebung umsetzenden Wert (ÄS) gesteuert werden und entsprechend zwei Werte (NE1, NF1) liefern;
- ein digitales Hochpassfilter (31 bis 37) zum Filtern des Hinweissignals für das Stopfen (S);
- zwei zweite Funktionsgeneratoren (38, 39), die durch das gefilterte Signal gesteuert werden und entsprechend zwei Werte (NE2, NF2) liefern;
- Mittel (16, 17) zum Berechnen des ersten und des zweiten Schwellenwertes (NE, NF), indem sie entsprechend einen von den ersten Funktionsgeneratoren (22, 23) gelieferten Wert (NE1; NF1) und einen von den zweiten Funktionsgeneratoren (38, 39) gelieferten Wert (NE2; NF2) addieren.

6. Anordnung nach Anspruch 5, dadurch gekennzeichnet, dass das digitale Filter (31 bis 37) ein Hochpassfilter ist, dessen Bandbreite veränderlich und durch den Wert wenigstens eines Parameters (m1, m2) bestimmt ist; und dass es Mittel (30, 31) zum Bestimmen des Wertes jedes Parameters des Filters in Abhängigkeit von der Auffüllung (?P) des Pufferspeichers (5) umfasst, so dass die Bandbreite des Filters erhöht wird, wenn eine Transiente dazu tendiert, diesen Speicher zu sättigen.

7. Anordnung nach Anspruch 6, dadurch gekennzeichnet, dass die Mittel (30, 31) zum Bestimmen des Wertes wenigstens eines Parameters den Wert wenigstens eines Parameters im Sinne einer Erhöhung der Bandbreite, wenn die Auffüllung (?P) des Speichers (12) größer als ein vorbestimmter Schwellenwert wird, und mit den Stopfungen synchron verändern, um den Wert dieses Parameters kurz vor einem Stopfen zu verändern; und dass sie den Wert wenigstens eines Parameters im Sinne einer Verringerung der Bandbreite verändern:

- wenn die Auffüllung kleiner als ein vorbestimmter Schwellenwert wird;
- und wenn die vorhergehende Bedingung während einer vorbestimmten Dauer (T$_0$) erfüllt ist;
- und wenn diese Mittel eine Folge von Stopfungen erfassen, die während dieser vorbestimmten Dauer (T$_0$) keine Unterbrechung ausweist.

8. Anordnung nach Anspruch 6, dadurch gekennzeichnet, dass die Bandbreite des Filters (31 bis 37) durch wenigstens zwei Parameter (m1, m2) bestimmt ist; dass die Mittel (30, 31) zum Bestimmen des Wertes jedes Parameters des Filters den Wert der Auffüllung mit mehreren festgelegten und verschiedenen Schwellenwerten vergleichen; und dass sie nur einen einzigen Parameter (m1, m2) auf einmal ändern, wenn die Auffüllung größer bzw. kleiner als einer der Schwellenwerte wird.

9. Anordnung nach Anspruch 6, bei welcher das Filter (31 bis 37) wenigstens zwei Stufen umfasst und bei welcher der von der ersten Stufe (32 bis 34) gelieferte Endwert mit zwei multipliziert bzw. dividiert wird, wenn sich der Wert eines Parameters um eine Einheit erhöht bzw. verringert; dadurch gekennzeichnet, dass die erste Stufe (31 bis 34) außerdem Mittel (31, 33) zum Multiplizieren bzw. Dividieren des durch diese erste Stufe gelieferten Endwertes mit $2^k$ und Mittel (31) zum Steuern der Mittel zum Multiplizieren bzw. Dividieren umfasst, wenn die Mittel (31) zum Bestimmen des Wertes jedes Parameters für die erste Stufe eine Parameteränderung gleich +k bzw. -k ermittelt, wobei k eine ganze Zahl ungleich 0 ist.

10. Anordnung nach Anspruch 5, dadurch gekennzeichnet, dass das Hinweissignal für ein Stopfen (S) vorrübergehend zwei digitale Werte mit entgegengesetzten Vorzeichen annimmt, um ein Positivstopfen bzw. ein Negativstopfen anzugeben, und einen Wert Null bei Nichtvorhandensein eines Stopfens annimmt; und dass die zweiten Funktionsgeneratoren (38, 39) entsprechend die folgenden Funktionen erzeugen:

   - eine Funktion (NE2), die in Abhängigkeit vom gefilterten Stopfsignal (S8) linear wächst, wenn dieses letztere ein Positivstopfen angibt, und einen vorbestimmten festen Wert hat, wenn es ein Negativstopfen oder ein Nichtvorhandensein eines Stopfens angibt;
   - eine Funktion (NF2), die in Abhängigkeit von dem gefilterten Stopfsignal (SF) linear wächst, wenn dieses letztere ein Negativstopfen angibt, und einen vorbestimmten festen Wert hat, wenn es ein Positivstopfen oder ein Nichtvorhandensein eines Stopfens angibt.

FIG.1

FIG. 2

# FIG.3

# FIG.6

EP 0 650 273 B1

FIG.4

# FIG.5

EP 0 650 273 B1

EP 0 650 273 B1

FIG.7

FIG.8

22

# FIG.9

# FIG.10

FIG.11

# FIG.12

# FIG.13

FIG.14

FIG.15

# FIG.16

# FIG.17